**Europäisches Patentamt**

**European Patent Office**

**Office européen des brevets**

(19)

(11) Veröffentlichungsnummer: **0 396 784**

**A1**

(12) ## EUROPÄISCHE PATENTANMELDUNG

(21) Anmeldenummer: **88106065.1**

(22) Anmeldetag: **08.05.89**

(51) Int. Cl.⁵: **H01R 33/05**

(43) Veröffentlichungstag der Anmeldung:
**14.11.90 Patentblatt 90/46**

(84) Benannte Vertragsstaaten:
**AT BE CH DE ES FR GB GR IT LI LU NL SE**

(71) Anmelder: **Münür, Acir**
**c/o Tresch Nordstrasse 181**
**CH-8037 Zürich(CH)**

(72) Erfinder: **Münür, Acir**
**c/o Tresch Nordstrasse 181**
**CH-8037 Zürich(CH)**

(54) **Schnell-Spannsystem für kompletten Beleuchtungskörper zum Schnell-Spannen von Glühbirnen, Lampenschirme und Beleuchtungskörper.**

(57) Besteht aus einer, mit einem Schnellspann-Mechanismus ausgerüsteten Fassung, in die verschiedene Lampen und Beleuchtungskörper steckbar montiert werden und die von jedermann in bestehende Leuchten montiert werden kann. Dazu ist die Fassung mit dem Norm-Gewindesockel (8) versehen, der mit dem Führungsrohr (1) im oberen Teil zusammen, aus Kunststoff gespritzt ist. Im unteren Teil hat das Führungsrohr (1) seitlich schräge Kanäle, in denen lange Spannstifte (2) an den Enden ausserhalb des Führungsrohres (1) von dem Führungsring (3) und der Feder (4) festgedrückt sind. Beim Montieren wird die Glühbirne in die Fassung gestossen, dabei schiebt der Kunststoffring (9) zuerst die Spannstifte (2) in den schrägen Kanälen nach oben, bis diese durch den Druck der Feder (4) und des Führungsringes (3) in den Kanal des Kunststoffringes (9) zurück schnappen. Gleichzeitig wird die Glühbirne an einen Dichtungsring gedrückt und wird somit in der Fassung gasdicht rüttelsicher festgehalten. Die stromleitenden Kontakte (6) sind innerhalb und ausserhalb des Schraubsockels (8) mit Feder (7) an den Lampenanschluss gedrückt. Beim Auswechseln der Glühbirne wird der aüssere Schiebering (5) hoch gedrückt, dabei stösst die Ringfläche unten am aüsseren Schiebering (5) die langen Spannstifte (2) an den Enden, ausserhalb des Führungsrohres (1) nach oben und die Spannstifte (2) gehen in den schrägen Kanälen in der diagonalen Richtung auseinander, die Glühbirne fällt aus der Fassung. Zweck dieses Schnellspann-Systems, die Glühbirnen mit einem Druck zu montieren, ist die

Lampen an höheren Decken vom Boden aus, ohne auf eine Leiter oder einen Stuhl zu steigen mit einem Handling (12,13) auszuwechseln.

Seite 5

Schnell-Spannsystem für Glühbirnen

Zeichnung 1.

Glühbirne zum Demontieren wird Pos.5 hoch gedrückt

Beim Montieren der Glühbirne wird in die Fassung gedrückt

## Schnell-Spannsystem für kompletten Beleuchtungskörper zum Schnell-Spannen von Glühbirnen, Lampenschirmen und Beleuchtungskörper.

Die Erfindung bezieht sich auf ein Schnell-Spannsystem ( S-Spasy ) mit Schnappverschluss für kompletten Beleuchtungskörper, das beim Montieren und Demontieren von 3 verschiedenen Bauteilen zur Geltung kommt und dabei wird immer das gleiche S-Spasy angewendet.

1 ) S-Spasy für Glühbirnen.

2 ) S-Spasy für Lampenschirme und Deckenbeleuchtungskörper.

3 ) S-Spasy für die Verbindungsstellen von kompletten Beleuchtungskörpern an unerreichbaren Decken oder Stützen.

1 ) S-Spasy für Glühbirnen

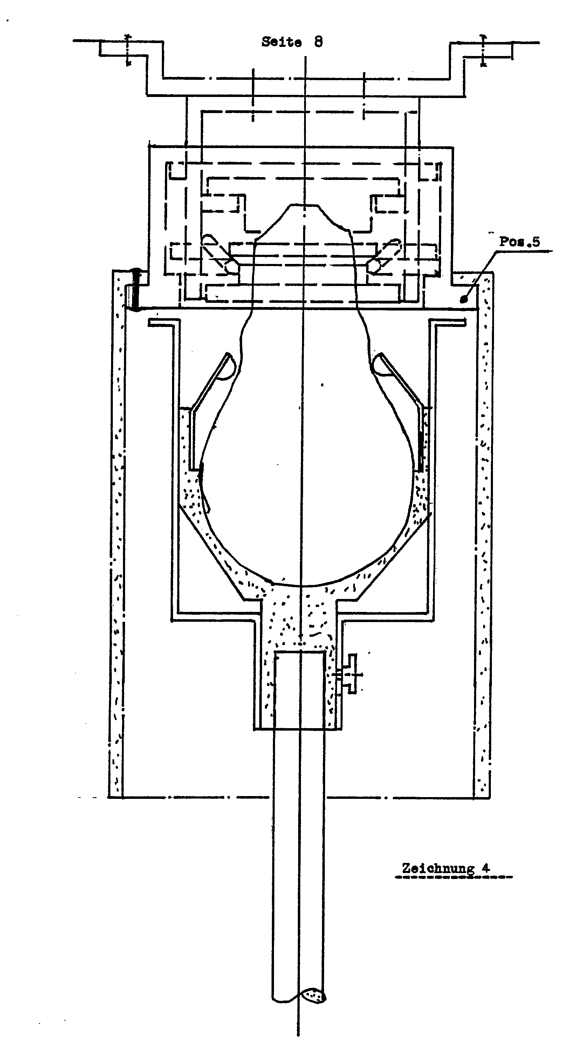

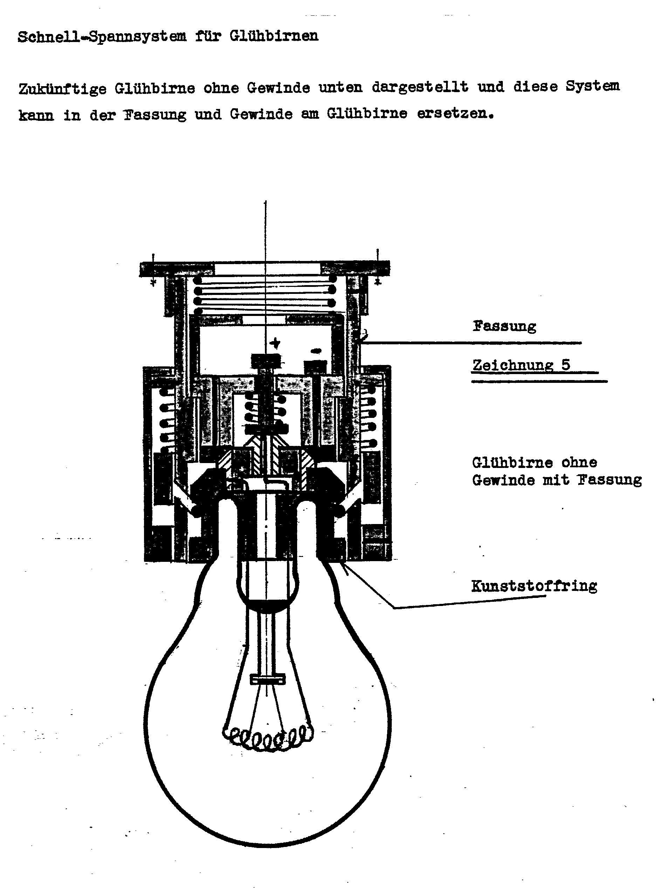

Traditionell werden Glühbirnen durch Drehbewegung (Schrauben) montiert. Die Schraubbewegung ist relativ kompliziert, es kommt auch leicht zu Verkantungen. Beim Demontieren der Glühbirnen muss man auf einen Stuhl oder eine Leiter steigen, was unfallgefährlich und kompliziert ist. Nachfolgende Erfindung löst diese Probleme. Die Glühbirnen werden nicht mehr geschraubt, sondern durch einen leichten Druck wird die Glühbirne in die Fassung montiert oder demontiert. Die Herstellung der bestehenden Glühbirnenfassungen ist teuer und kompliziert, weil alle Glühbirnenfassungen mit Gewinde versehen sind. Das neue S-Spasy kann bestehende Gewinde und Fassung der Glühbirne komplet ersetzen. Es ist eine Frage der Hersteller. Es lässt sich Geld und Zeit sparen. Die zukünftige Glübirne ohne Gewinde ist auf Zeichnung 5 dargestellt. Um auch bestehende Glühbirnen zu diesem Schnell-Spannsystem anwenden zu können, wird auf die Glühbirne ein auswechselbarer Kunststoffring geschraubt. Die Glühbirnen werden durch diesen Ring in der Fassung mit Schnappverschluss fest gehalten. Ferner sollen die Glühbirnen mittels einer Stange mit speziellem Adapter vom Boden aus ausgewechselt werden. Siehe Zeichnung 4.

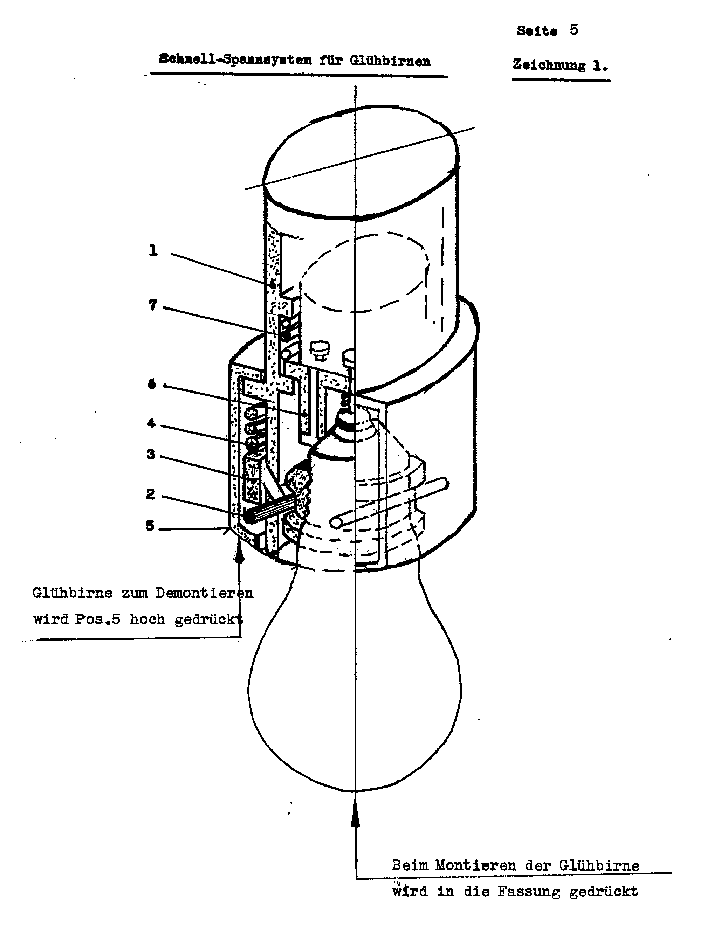

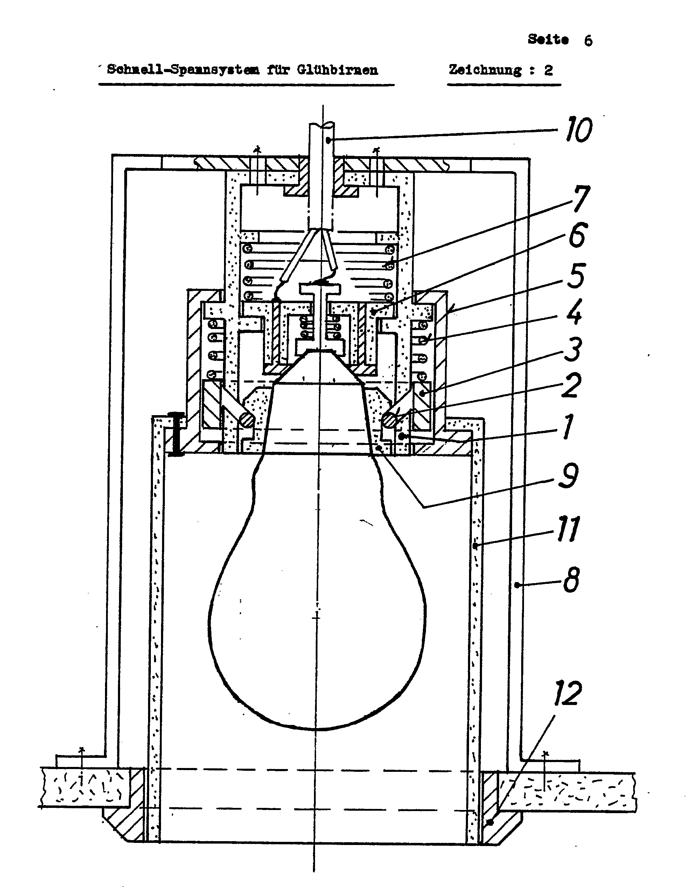

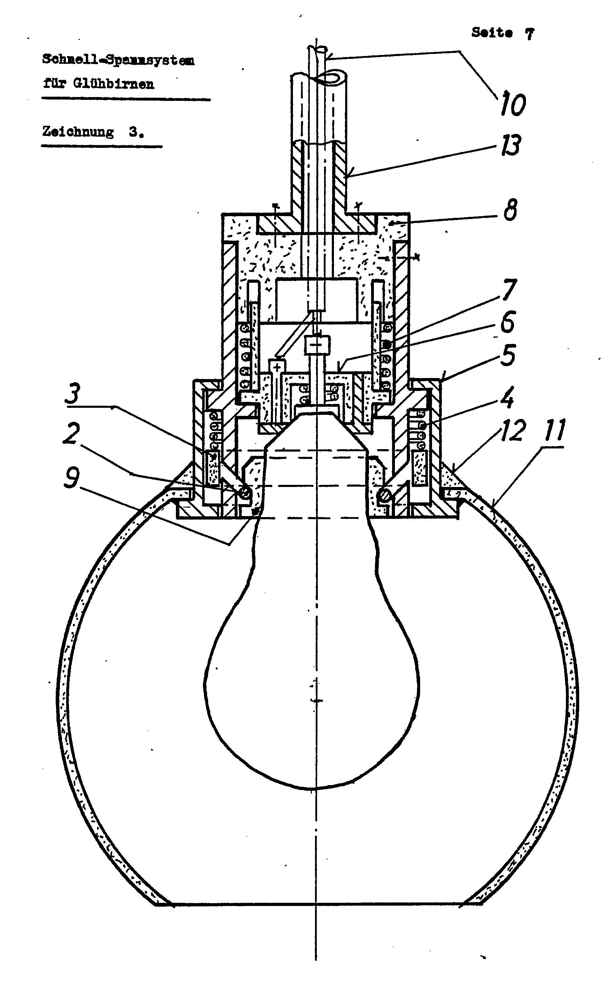

Ausführliche Funktionsbeschreibung: Siehe Zeichnungen 1-3.

Die Glühbirnenfassung besteht aus einem Basisstück, ein rundes Teil Pos.1 welches an die Decke oder in die Lampenschirme montiert wird und hat zwei schräge Kanäle, in diese werden Stifte geführt, Pos.2.

Diese zwei Stifte liegen parallel und werden aussen Pos. 1 an der vier Enden von oben mit einem Ring Pos.3 und einer Feder Pos.4 nach unten gedrückt. Die beiden Stifte wirken wie ein Schnappverschluss und halten Pos. 9 die Glühbirne fest.

Beim Montieren drückt man die Glühbirne in die Fassung und dann werden zuerst beide Stifte Pos.9 in den schrägen Kanälen nach oben geschoben. Danach rutschen beide Stifte zurück und schnappen in den Kanal des Kunststoffringes Pos.9 fest. Die Glübirne und die stromleitenden Kontakte sind gegen Erschütterungen mit Federdruck Pos.4 und 7 gesichert. Beim Demontieren der Glühbirne wird der äussere Ring Pos.5 leicht nach oben geschoben. Dabei werden von Pos.5 die beiden Stifte von unten hoch gestossen und so gehen sie auseinander, die Glühbirne springt heraus. Pos. 6 ist jener Teil welcher die Kontaktierung für die Glühbirne enthält und durch eine Feder Pos.7 gegen die Glühbirne gedrückt wird. Sobalt die Glühbirne hinein gestossen wird, führen die stromleitenden Teile auf Pos.6 den Strom vom Kabel Pos.10 auf die Glühbirne.

Zum Auswechseln der Glühbirne vom Boden aus, ohne Stuhl und Leiter gibt es zwei Arten.

a ) Bei normaler Deckenhöhe wird die Glühbirne mit Stab ausgewechselt.

b ) Bei höherer Decke wird die Lampe mit Verlängerungsstange kombiniert.

a ) Wie Zeichnung 4 zeigt, besteht eine Stange mit Adapter, welche der Form der Glühbirne angepasst ist. Beim Montieren wird die Glühbirne in den Greifer hinein gesteckt und nachher die Glübirne mit einem leichten Druck in der Fassung montiert. Beim Demontieren wird der äussere Ring am Greifer hochgeschoben, sodass der Ring an der Glübirnenfassung Pos.5 hoch gehoben wird und die Glühbirne herausfällt.

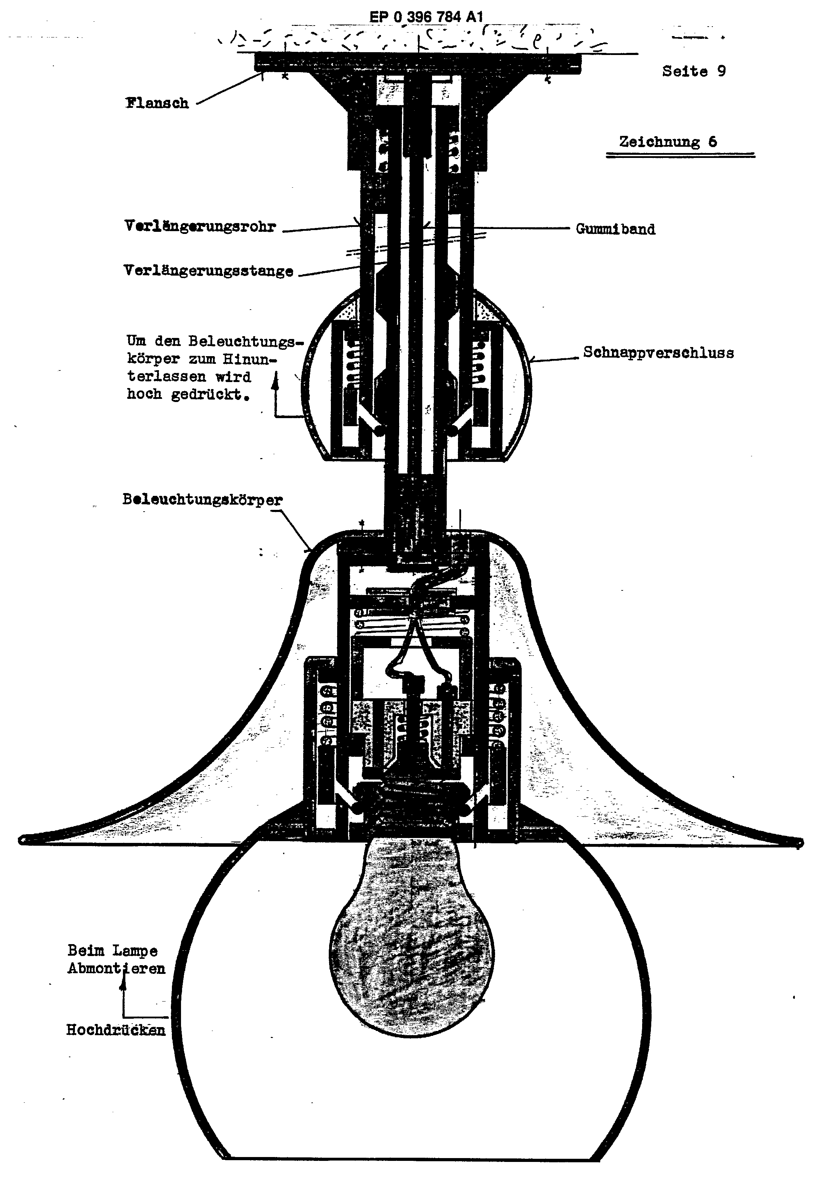

b ) Wie Zeichnung 6 zeigt ist der Beleuchtungskörper mit Verlängerungsrohr und Stange kombiniert. Um dem Beleuchtungskörper hinunter zu bringen wird der Schnappverschluss vom Boden aus mit einem Stab hoch gestossen, der Schnappverschluss löst sich und der Beleuchtungskörper kommt auf die gewünschte Höhe hinunter. Dieser Schnappverschlussmechanismus funktioniert sonst genau so wie bei der Glühbirnenfassung. Das äussere Verlängerungsrohr wird oben mit Flansch an der Decke festgeschraubt und am Ende hat es den Schnappmechanismus. Die innere Verlängerungsstange mit dem Beleuchtungskörper wird oben mit Gummiband am äusseren Verlängerungsrohr fest gehalten. Das Gummiband lässt den Beleuchtungskörper langsam hinunter kommen und hilft auch den Beleuchtungskörper beim hoch zu bringen. Für das wird der Beleuchtungskörper bis zur gewünschten Höhe hoch gestossen.

2 ) S-Spasy für Lampenschirme und Deckenbeleuchtungskörper.

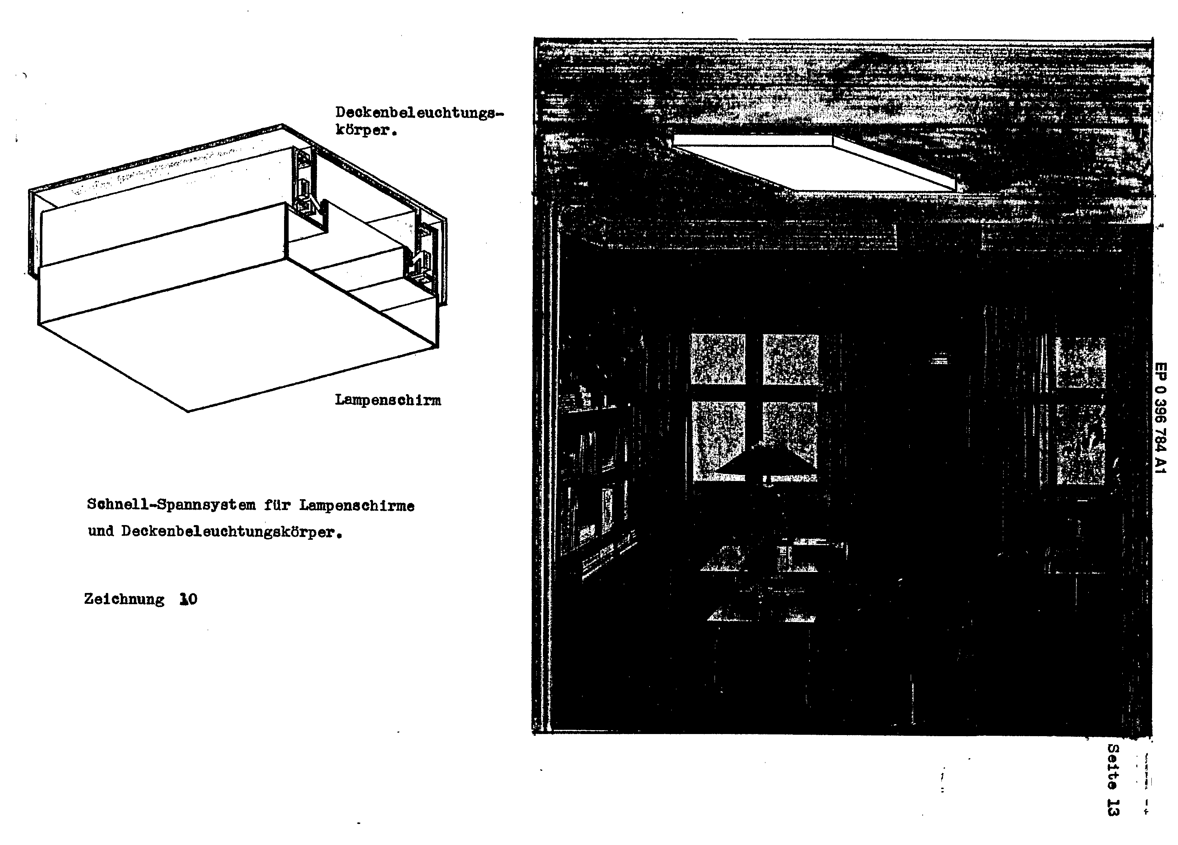

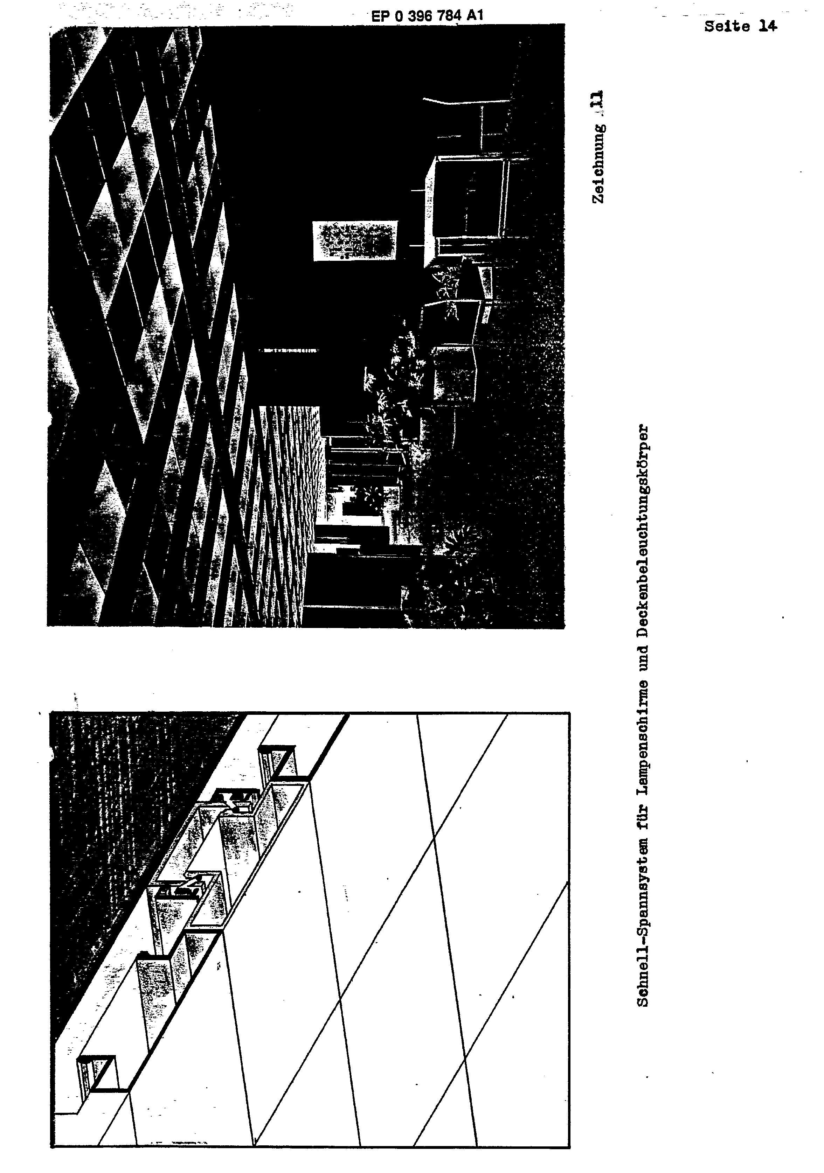

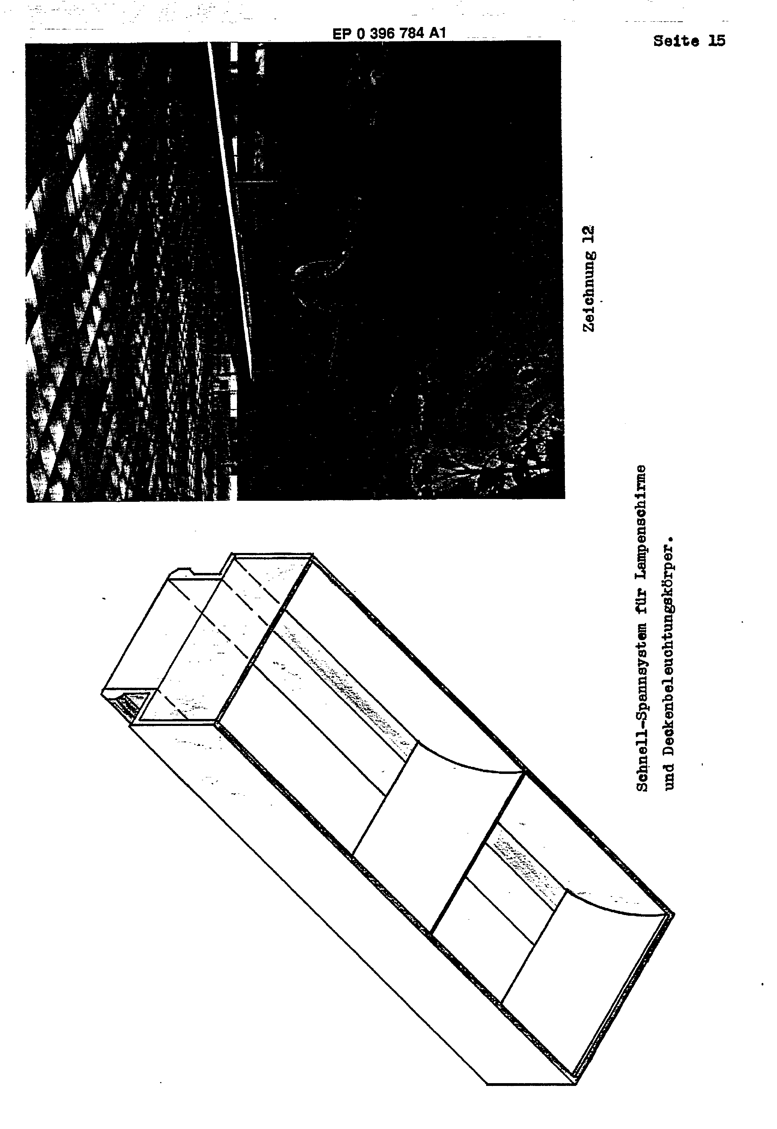

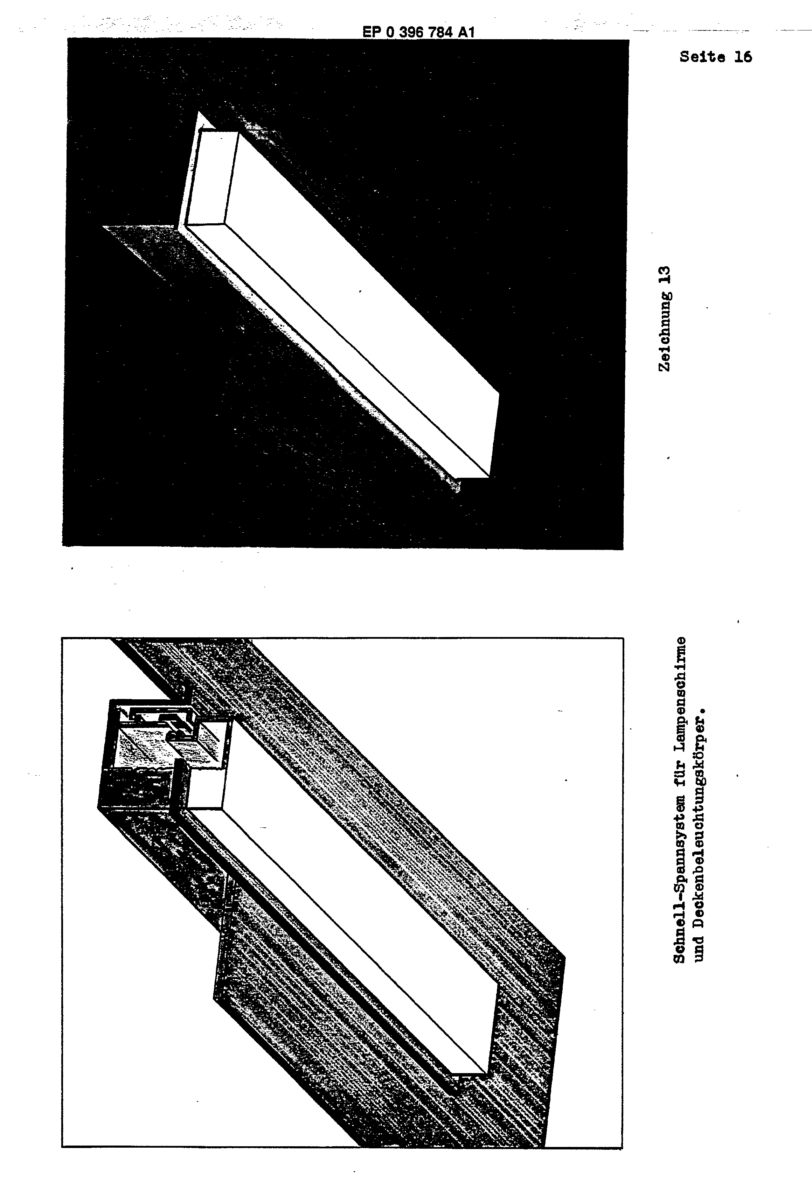

Das Schnell-Spannsystem funktioniert sonst genau so wie bei der Glühbirnenfassung und wird bei Lampenschirmfassung angewendet. Das System erlaubt die Lampenschirme ohne Werkzeug schnell auszuwechseln. Mit einem leichten Druck werden die Lampenschirme montiert und demontiert und verschieden formige Lampenschirme werden mit diesem S-Spasy für ganze Deckenbeleuchtungen in der Lampenschirmfassung fest gehalten. Siehe Zeichnungen 10-13.

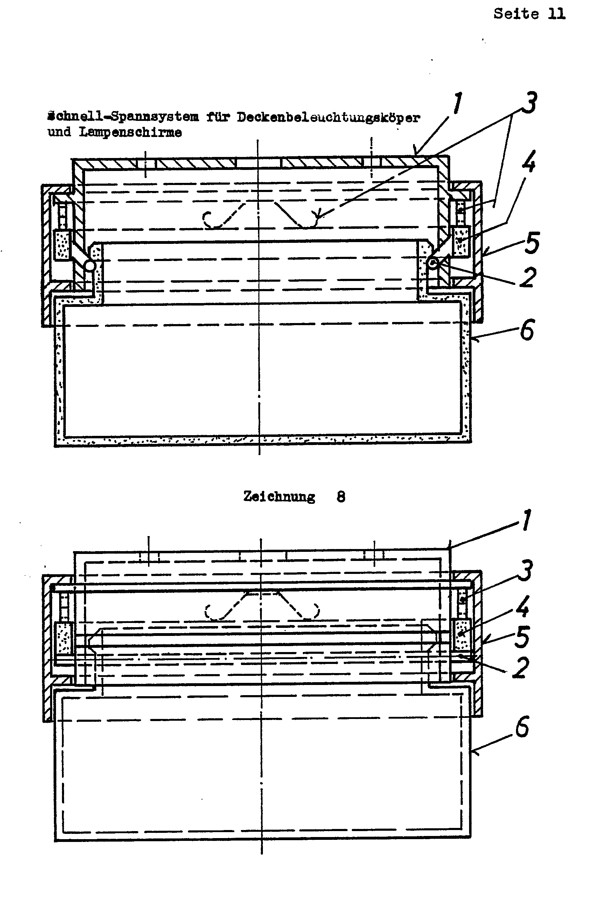

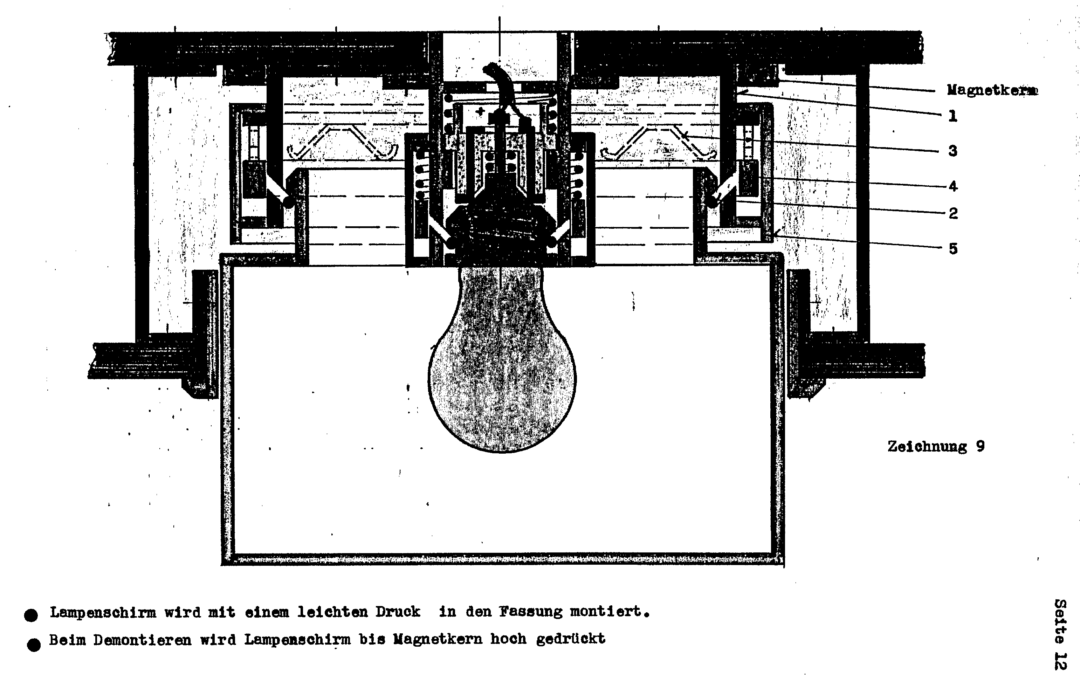

Ausführliche Funktionsbeschreibung siehe Zeichnung 8 und 9.

Die Lampenschirmfassung besteht aus einem Basisstück Pos.1 und ist ein Gehäuse das an der Decke festgeschraubt wird. Es hat kastenähnliche Form und besitzt auf zwei Seiten zwei schräge durchgehende Kanäle, in diese werden zwei lange Stifte geführt, Pos.2. Diese beiden langen Stifte liegen parallel und werden aussen Pos.1 an den vier Enden mit Flansch Pos.4 und Blattfedern Pos.3 von oben hinunter gedrückt. Beim Montieren des Lampenschirms werden zuerst beide Stifte hoch gedrückt und gehen so auseinander. Danach rutschen beide Stifte zurück und schnappen in den Kanal des Lampenschirm fest Pos.6 Beim Demontieren muss man das äussere Gehäuse Pos.5 hinaufdrücken und der Lampenschirm löst sich.

Wie Zeichnung 9 zeigt werden Lampenschirme beim Montieren mit einem leichten Druck in den Fassung motiert.Beim Demontieren werden in der Fassung bis Magnetkern hoch gedrückt und Lampenschirm heraus geholt. Beim hoch drücken den Lampenschirm wird äussere Pos.5 von Lampenschirm hoch gedrück,sodass die Lampenschirm mit Drücken Montiert oder Demontiert.

3 ) S-Spasy für die Verbindungsstellen von kompletten Beleuchtungskörpen an unerreichbaren Decken oder Stützen.

Das S-Spasy funktioniert sonst genau so wie bei der Glühbirnenfassung und wird bei den Verbindungsstellen von kompletten Beleuchtungskörpern angewendet. Das System erlaubt den Beleuchtungskörper sich selbst zu lösen und hinunter kommen zu lassen. Es erleichtert den Service am Beleuchtungskörper, zum Beispiel die Lampen auswechseln oder den Beleuchtungskörper reinigen.

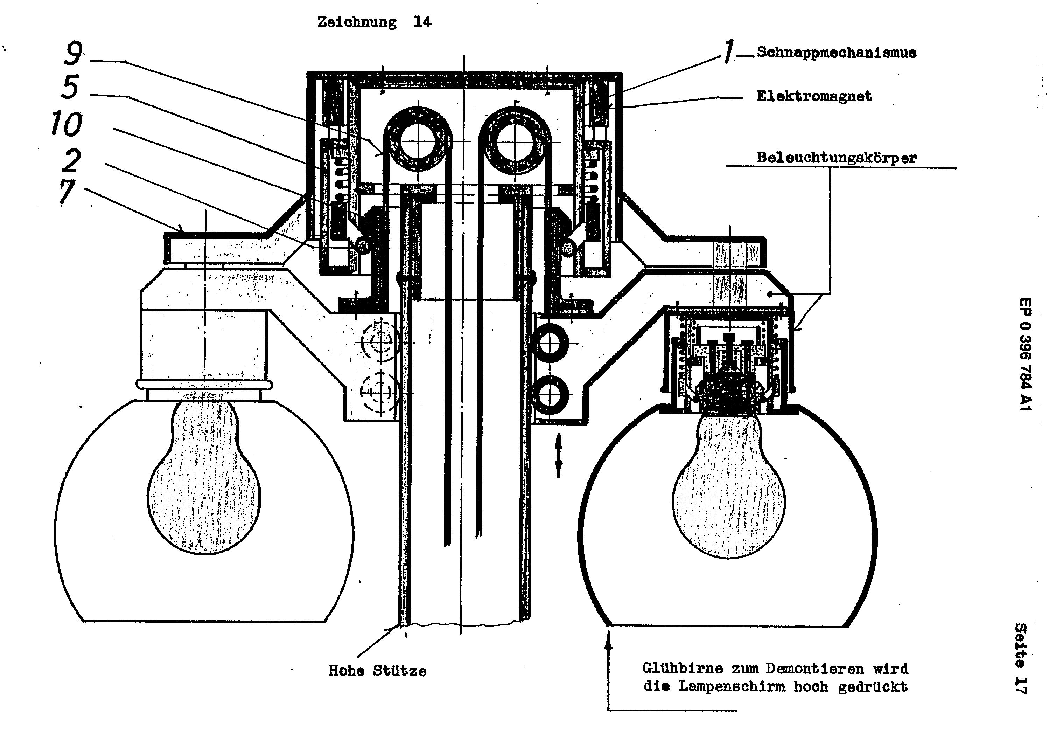

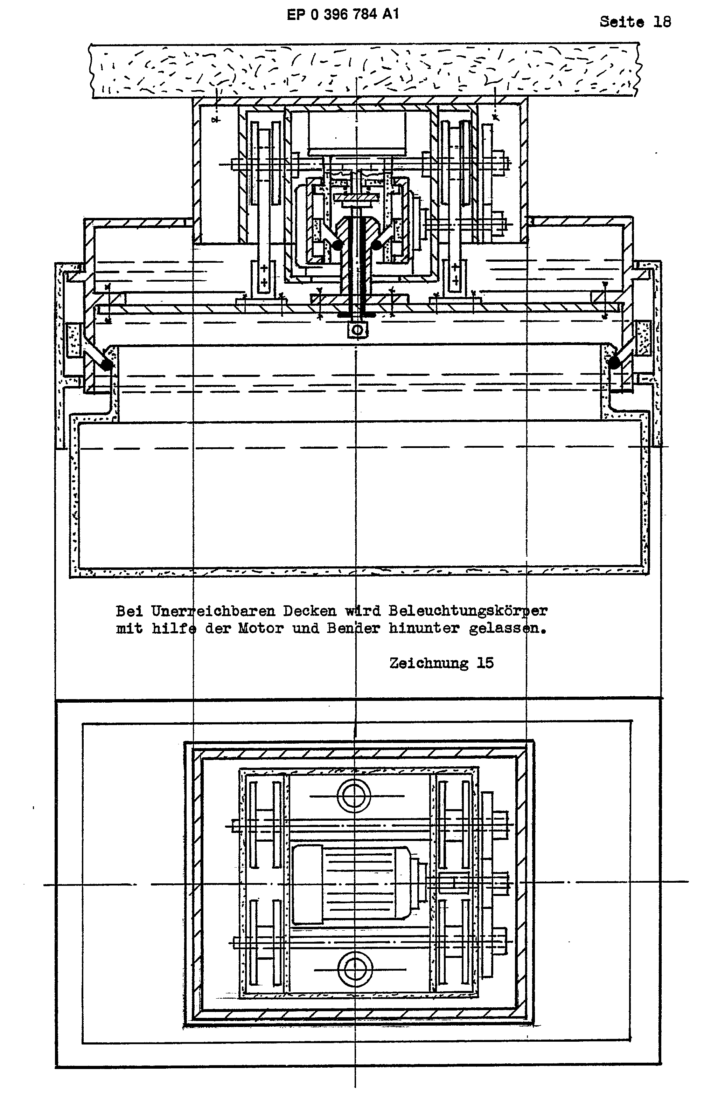

Ausführliche Funktionsbeschreibung: Siehe Zeichnungen 14 und 15.

Wie Zeichnung 14 zeigt ist der Beleuchtungskörper mit Rollen und Schalter zum Kontaktieren der Glühbirne kombiniert. Der Beleuchtungskörper wird von der hoher Stütze mit Bänder hinunter gelassen oder hinauf gerollt. Der Schnappmechanismus ist am oberen Ende der Stütze fest montiert. Die elektrischen Kontakte sind gegen Regenwasser geschützt Pos. 7. Die Kabel und Bänder Pos.9 sind in der Stütze plaziert. Der Schnappmechanismus mit den zwei parallel liegenden Stiften hält den Beleuchtungskörper an der Fassung Pos.10 fest, sobald dieser hinauf gezogen wird. Um den Beleuchtungskörper zum Hinunterlassen aus dem Schnappverschluss zu lösen, wird das äussere Gehäuse Pos.5 elektromagnetisch oder mechanisch hoch gedrückt, dabei gehen die beiden Stifte Pos.2 in den schrägen Kanälen auseinander. Der Beleuchtungskörper kann hinunter rollen.

## Ansprüche

1. Schnellspann-System zum schnell Spannen von Glühbirnen, anderen Lampen und Beleuchtungskörper. Besteht aus einer Fassung, die mit einem Schnappverschluss ausgerüstet ist. In der Fassung ist ein Führungsrohr (1), das mit schrägen Kanälen versehen ist. In diesen liegen die Spannstifte (2), die mit einer Feder (4) und einem Führungsring (3) in den Kanälen festgedrückt sind. Durch Hochdrücken des äusseren Schieberings (5) werden die Spannstifte in den Kanälen seitlich verschoben und der Schnappverschluss öffnet sich. Die stromleitenden Kontakte (6) sind innerhalb und ausserhalb des Schraubsockels (8) mit Federn (7) an den Lampenanschluss gedrückt. Ein auf den Glühbirnensockel aufschraubbarer Kunststoffring (9) ist mit einem Kanal versehen, in den die Spannstifte einschnappen. Die Fassung mit dem Schnellspann-System ist gekennzeichnet durch die Spannstifte (2) in den schrägen Kanälen des Führungsrohres, die durch Druck einer Feder (4) und einem Führungsring (3) in den Kanal des Kunststoffringes (9) festschnappen und durch Hochdrükken des äusseren Schieberinges (5) in den schrägen Kanälen auseinander gehen und sich dabei der Schnappverschluss öffnet.

2. Handling zum Auswechseln der Glühbirne vom Boden aus. Besteht aus einem Adapter (12), der der Formel der Glühbirne angepasst ist und an dem biegsame Federn (11) befestigt sind und aus einem ässeren Gehäuse (10). Beide Teile sind auf eine Teleskopstange (13) montiert. Mittels der Schraube (14) kann das äussere Gehäuse (10) verschoben werden.

3. Für die Fassung mit dem Schnellspann-System nach Patentanspruch 1, ein Reflektor (17) mit Kunststoffring (15) für Halogenlampen. Auf diesen wird ein abnehmbarer Stecker (16) mit den stromleitenden Kontakte gesetzt. Klemmfedern (18) halten die Anschlussstifte der Halogenlampe fest.

4. Für die Fassung mit dem Schnellspann-System nach Patentanspruch 1 für Leuchstofflampen ist ein Kunststoffteil (19) mit Schnappkanal viereckig ausgeführt und mit Klemmfedern (20) ausgerüstet. Der Stecker (21) sitzt im Kunststoffteil fest und der Stromkontakt (23) ist mit Federn versehen.

5. Für die Fassung mit dem Schnellspann-System nach Patentanspruch 1 für Lampenschirme, ist auf einem Beleuchtungskörper (27) der Kunststoffring (24) mit Kanal befestigt. Darauf wird ein rundes Kunststoffteil (25) gesetzt, das in der Mitte mit Gewinde (26) versehen ist.

6. Neuer Glühbirnensockel ohne Gewinde mit Schnappkanal, in den gleichen Massen und Form wie der Kunststoffring (9). Der Sockel ist zugleich für Leuchtstoff- und Halogenlampen.

7. Schnellspann-System für Strassenbeleuchtung. Der Schnappmechanismus ist auf der Stütze (35) mit elektrischer Steuerung (38) fest montiert. Der komplette Beleuchtungskörper wird durch den, am Beleuchtungskörper fest montierten Schnappblock (33) von den Spannstiften (2) festgehalten. Die Stifte werden in den Kanälen mit Führungsring (3) und einer Feder (4) festgedrückt. Der äussere Ring (5) mit Elektromagnet (37) verschiebt sich nach oben, die Spannstifte gehen auseinander und der komplette Beleuchtungskörper an Fahrräder (30) geleitet und von Seilbänder (36) auf Rollen (34) gehalten kommt hinunter.

## Schnell-Spannsystem für Glühbirnen

1
7
6
4
3
2
5

Glühbirne zum Demontieren
wird Pos.5 hoch gedrückt

Beim Montieren der Glühbirne
wird in die Fassung gedrückt

Schnell-Spannsystem für Glühbirnen       Zeichnung : 2

Schnell-Spannsystem
für Glühbirnen

Zeichnung 3.

Seite 8

Pos.5

Zeichnung 4

Schnell-Spannsystem für Glühbirnen

Zukünftige Glühbirne ohne Gewinde unten dargestellt und diese System
kann in der Fassung und Gewinde am Glühbirne ersetzen.

Fassung

Zeichnung 5

Glühbirne ohne
Gewinde mit Fassung

Kunststoffring

Schnell-Spannsystem für Glühbirnen

**Flansch**

Zeichnung 6

**Verlängerungsrohr** — **Gummiband**

**Verlängerungsstange**

Um den Beleuchtungskörper zum Hinunterlassen wird
hoch gedrückt.

**Schnappverschluss**

**Beleuchtungskörper**

Beim Lampe
Abmontieren

Hochdrücken

Schnell-Spannsystem

für Glühbirnen

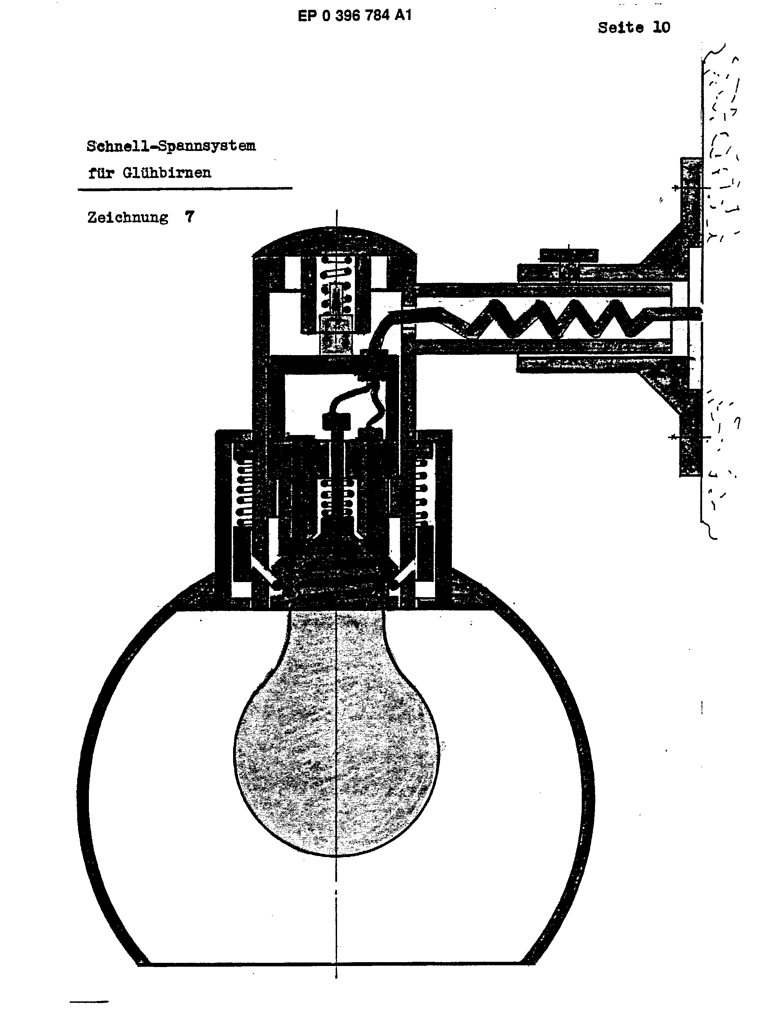

Zeichnung   7

Schnell-Spannsystem für Deckenbeleuchtungsköper
und Lampenschirme

Zeichnung   8

Magnetkern

1

3

4

2

5

Zeichnung 9

● Lampenschirm wird mit einem leichten Druck in den Fassung montiert.

● Beim Demontieren wird Lampenschirm bis Magnetkern hoch gedrückt

Deckenbeleuchtungskörper.

Lampenschirm

Schnell-Spannsystem für Lampenschirme
und Deckenbeleuchtungskörper.

Zeichnung 10

EP 0 396 784 A1

Zeichnung 11

Schnell-Spannsystem für Lampenschirme und Deckenbeleuchtungskörper

Zeichnung 12

Schnell-Spannsystem für Lampenschirme und Deckenbeleuchtungskörper.

EP 0 396 784 A1

Zeichnung 13

Schnell-Spannsystem für Lampenschirme
und Deckenbeleuchtungskörper.

Zeichnung 14

9

5

10

2

7

1 — Schnappmechanismus

Elektromagnet

Beleuchtungskörper

Hohe Stütze

Glühbirne zum Demontieren wird
die Lampenschirm hoch gedrückt

Bei Unerreichbaren Decken wird Beleuchtungskörper
mit hilfe der Motor und Bender hinunter gelassen.

Zeichnung 15

Europäisches
Patentamt

**EUROPÄISCHER TEILRECHERCHENBERICHT,**
der nach Regel 45 des Europäischen Patentübereinkommens für das weitere Verfahren als
europäischer Recherchenbericht gilt

Nummer der Anmeldung

EP 88 10 6065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-334 427 (P. KLEBER)<br><br>* Seite 1, Zeile 41 - Seite 2, Zeile 19; Figur 1 *<br><br>-- | 1-6 | H 01 R 33/05 |
| A | DE-A-1 956 162 (G & H TECHNOLOGY)<br><br>* Seite 4, Zeile 1 - Seite 8, letzter Absatz; Figuren 1,2 *<br><br>-- | 1-6 | |
| A | US-A-3 201 147 (H.A. DE CENZO)<br><br>* Spalte 3, Zeile 61 - Spalte 6, Zeile 2; Figuren 1-3 *<br><br>---- | 1-6 | |

RECHERCHIERTE SACHGEBIETE (Int. Cl.4)

H 01 R
F 21 V

### UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.

Vollständig recherchierte Patentansprüche: 1,2,4,5,6
Unvollständig recherchierte Patentansprüche:
Nicht recherchierte Patentansprüche: 3
Grund für die Beschränkung der Recherche:

Der, in Anspruch 3, beschriebene Reflektor, wird in keiner Weise im Beschreibungstext erwähnt. Deshalb ist es völlig unklar was der Anmelder mit diesem Anspruch überhaupt will.

| Recherchenort | Abschlußdatum der Recherche | Prüfer |
|---|---|---|
| DEN HAAG | 13-12-1989 | CRIQUI |

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## X MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Ansprüche 1-6: Schnellspann-System zum schnell Spannen von Glühbirnen.

2. Anspruch 7: Schnellspann-System für einen Lampensockel einer Strassenbeleuchtung.

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-6